Europäisches Patentamt

(19) European Patent Office

Office européen des brevets

(11) Publication number: **0 067 191**

**B1**

(12) **EUROPEAN PATENT SPECIFICATION**

(45) Date of publication of patent specification: **18.09.85**

(21) Application number: **82900124.7**

(22) Date of filing: **16.12.81**

(86) International application number:
**PCT/HU81/00046**

(87) International publication number:
**WO 82/02027 24.06.82 Gazette 82/16**

(51) Int. Cl.⁴: **B 62 M 1/18**

(54) **VEHICLE.**

(30) Priority: **16.12.80 HU 299980**

(43) Date of publication of application:
**22.12.82 Bulletin 82/51**

(45) Publication of the grant of the patent:
**18.09.85 Bulletin 85/38**

(84) Designated Contracting States:
**AT BE CH DE FR GB LI NL SE**

(56) References cited:
**DK-A- 41 785**
**US-A-1 420 394**
**US-A-1 420 791**
**US-A-2 555 480**
**US-A-3 086 795**
**US-A-3 107 926**
**US-A-3 173 632**
**US-A-3 237 961**

(73) Proprietor: **ARANYKALASZ MGTSZ**
**Vörös tér 3**
**H-2300 Ráckeve (HU)**

(72) Inventor: **HEGEDÜS, Karoly**
**Kórus u. 11. 1213**
**H-1213 Budapest XXI (HU)**

(74) Representative: **Lee, Philip Graham et al**
**MARKS & CLERK 57/60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to vehicle, especially for children and those taking part in sports, disabled persons, and for those running about elsewhere e.g. in railway stations, airfields.

Several vehicles are known for children, those taking part in sports, disabled persons and for those running about elsewhere. One large group is generally characterized in that the driving is done by the physical strength of the person using the vehicle. The power is transmitted at such vehicles directly through an arm to a centrally turning wheel, or wheels, or indirectly to a wheel provided with a centrally turning arm with the use of rod system or chain, and the arising torque ensures the driving of the vehicle. Such vehicles are generally known as bicycles or trolleys. Sporting toy-vehicles for children are known in which the chassis is formed by flat surface and the wheels are fixed to an axle supporting the chassis eccentrically with the eccentricities opposing each other. Running of the vehicle is ensured by transferring the centre of gravity of the person's body standing or sitting on the chassis, the vehicle performing rocking motion around the longitudinal axis of the chassis. The eccentric fastening of the wheels in effect forms arms which are loaded alternately with the power given by transferring the weight of the body. The forces of the load bring about the torque to keep the vehicle in motion.

US—A—1420394 discloses a vehicle which has a chassis and a supporting steerable carriage, and one driving bicycle part which comprises driving wheels fixed with opposite eccentricity to a common driving shaft which intersects at an angle the theoretical line passing through the centre of the driving wheels. Hence the driving wheels must both rotate with the shaft.

A disadvantage of this vehicle is the difficulty in steering, i.e. running on a predetermined track is impossible, thus such vehicles have not gained general acceptance in the practice either as a toy or as a sports implement.

The invention aims to improve on such toy-vehicles by overcoming this drawback.

The present invention provides a vehicle comprising a chassis having a supporting steerable carriage part and a driving bicycle part, the driving bicycle part comprising driving wheels fixed with opposite eccentricity to a common driving shaft, the driving shaft intersecting at an angle the theoretical line passing through the centre of the driving wheels, characterised in that one of the driving wheels is fixed to the driving shaft and the other driving wheel is mounted on the driving shaft to be freely rotatable about its wheel centre.

In a preferable construction of the invention at least one end of the driving shaft of the driving bicycle is formed as an eccentric arm with opposite eccentricity and provided with bearing stub at its end, on which one of the driving wheels is carried to be freely turnable around its centre, while the other driving wheel is eccentrically fixed to the other end of the driving shaft, or if an eccentric arm is formed also at this end of the driving shaft, it is fixed to the bearing stub.

In another preferred construction one end of the driving shaft of the chassis-supporting driving bicycle is eccentrically fixed to the disc-surface of one of the driving wheels, while the other end with opposite and equal eccentricity is fixed to a disc having greater radius than the extent of eccentricity, while the other driving wheel is carried on the outer circumference of the disc and rotates freely around its centre.

Preferably the chassis is formed with a steerable chassis-part comprising a carriage with a steering mechanism and at least one driving bicycle-supported chassis-part being pivotably connected to pivot about the longitudinal axis of the chassis.

The entertainment and run-about of children and those taking part in sports may be ensured by having the carriage of the steerable chassis-part formed as at least one further driving bicycle.

According to a further preferred feature the driving bicycle of the steerable chassis-part provided with steering mechanism is formed to be turnable around a vertical axis.

Finally it is preferred that one of the driving wheels of the driving bicycle of the steerable chassis-part is mounted to be freely rotatable on a bearing stub of an eccentric arm formed at one end of the driving shaft, while the other driving wheel is releasably fixed by a clamp on to the bearing stub of the eccentric arm forming the other end of the driving shaft, and can turn freely when the clamp is released.

The construction of the vehicle according to the invention ensures rolling of the wheels of the driven bicycle on varying road profiles and at the same time the steerable carriage, preferably the steerable wheel or bicycle allows the use of the vehicle on predetermined tracks. The driven driving shaft of the vehicle can be mounted to be freely rotatable in bearings fixed directly to the chassis-part.

The vehicle can also be constructed with the driving bicycle being rotatable around a vertical pivot only at one point on the chassis, as well as the swinging motion around the pivot given by the conical travel of the eccentrically fixed wheels.

A great advantage of the vehicle according to the invention is, that by its simplicity and steerability it can be used as an independent vehicle, e.g. for disabled persons, or as other vehicle, apart from being a favoured toy or sports implement for children and adults as well.

Thus for instance it can be used to advantage in railway stations, airfields for the transport of passengers and parcels. Further advantage is that the vehicle according to the invention as a sports implement would highly develop the sense of rhythm of its user. By using several driving bicycles, it becomes suitable for communal sports and as such it can be used as a communal training implement.

The invention is further described by way of example with reference to the drawings, in which:

Figure 1 is a side view of a vehicle according to the invention;

Figure 2 is a rear view of the vehicle shown in Figure 1;

Figure 3 is a partial section along line III—III of Figure 1, taken through a driving bicycle thereof;

Figure 4 is a rear view of a further vehicle according to the invention;

Figure 5 is a partial section along line V—V of Figure 4, taken through a driving bicycle thereof;

Figure 6 is another example of the vehicle showing a top view of a steerable chassis-part provided with a driving bicycle;

Figure 7 is a top view of another vehicle according to the invention.

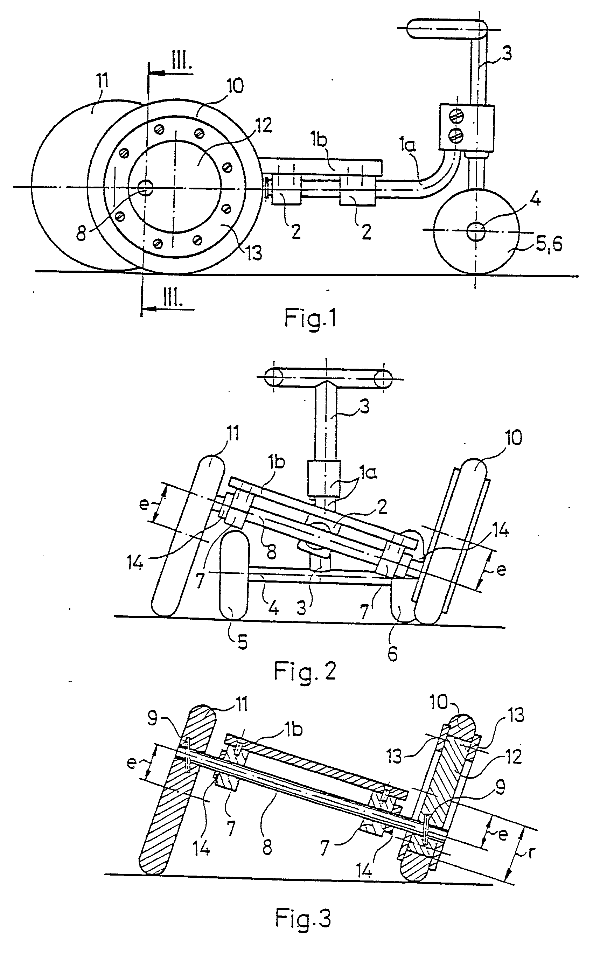

Chassis 1 of the vehicle according to the invention shown in Figures 1 to 3, consists of a steerable chassis-part 1a and a driving chassis-part 1b connected to the steerable chassis-part 1b through supporting bearings 2. The tilting is around the longitudinal axis of chassis 1.

A steering arm forming a steering mechanism 3 is turnably connected to the steerable chassis-part 1a, the lower part of which is provided with freely running wheels 5 and 6 on an axle 4.

The driving chassis-part 1b has a driving bicycle provided with eccentrically connected driving wheels 10 and 11. The driving shaft 8 of the driving bicycle is rotatably carried in bearings 7 arranged on the driving chassis 1b. The driving shaft 8 is at an acute angle to an imaginary line taken through the centres of the driving wheels 10 and 11, preferably intersecting the line joining the driving wheels 10 and 11 at its midpoint.

One end of the driving shaft 8 is eccentrically $e$ firmly and non-rotatably fixed by a pin 9 to driving wheel 11. Disc 12 is eccentrically $e$ firmly and non-rotatably connected by a pin 9 to the other end of driving shaft 8. The radius $r$ of disc 12 is greater than the eccentricity $e$. The radially inner surface of the driving wheel 10 rolls freely on the receiving surface of disc 12, in other words the driving wheel 10 is in effect mounted on disc 12 so as to be freely rotatable around its imaginary centre. The driving wheel 10 is guided on disc 12 by supporting surfaces 13 fixed to the disc 12 by a conventional method. The lateral displacement of the driving shaft 8 embedded in bearings 7 is prevented by retainer rings 14.

Though not shown in the drawings, the chassis 1 of the vehicle may be provided with a saddle or seat as well.

The person using the vehicle stands on the driving chassis-part 1b, placing his hands on the steering wheel of the steering mechanism 3. Next the person using the vehicle transfers the weight of his body to the higher, rising part of the driving chassis 1b, which is at an angle owing to the eccentricity of the eccentrically fixed driving wheels 10 and 11. The arm formed by the eccentricity is now loaded with the weight of the person using the vehicle, and so that arising torque sets the vehicle into motion. As soon as the vehicle is set into motion, the high part of the driving chassis-part 1b will slowly swing around the longitudinal axis of the chassis from the upper position into the lower position, while the other, opposite side of the driving chassis-part 1b will rise. By transferring the centre of gravity across the longitudinal axis, the driving chassis-part 1b now being in the upper position will be subjected to load. As a result of the loading the higher half of the driving chassis-part 1b will descend, thereby bringing about further rolling of the vehicle. The vehicle is driven by repeating this rhythmic transfer of the centre of gravity. During driving or motion of the vehicle, the driving shaft 8 connecting the driving wheels 10 and 11 fixed to the driving shaft 8, has a tendency to roll down on the conical surface of the two cone-pairs which point towards each other and have identical radius with the eccentricity $e$, if it were embedded in its centre. However, in the construction shown by way of example, the driving shaft 8 rotatably mounted in bearings 7 can not otherwise move in relation to the driving chassis-part 1b, thus — even when the vehicle travels in a straight line — the driving wheels 10 and 11 will either be fast or slow in relation to each other. This difference in wheel speed is eliminated by the driving wheel 10 being able to turn freely around its centre on disc 12.

In the case of a curvy track, the road length differences in the curve are completely eliminated by the construction according to the invention. The steering is simple with movement of the steering mechanism 3.

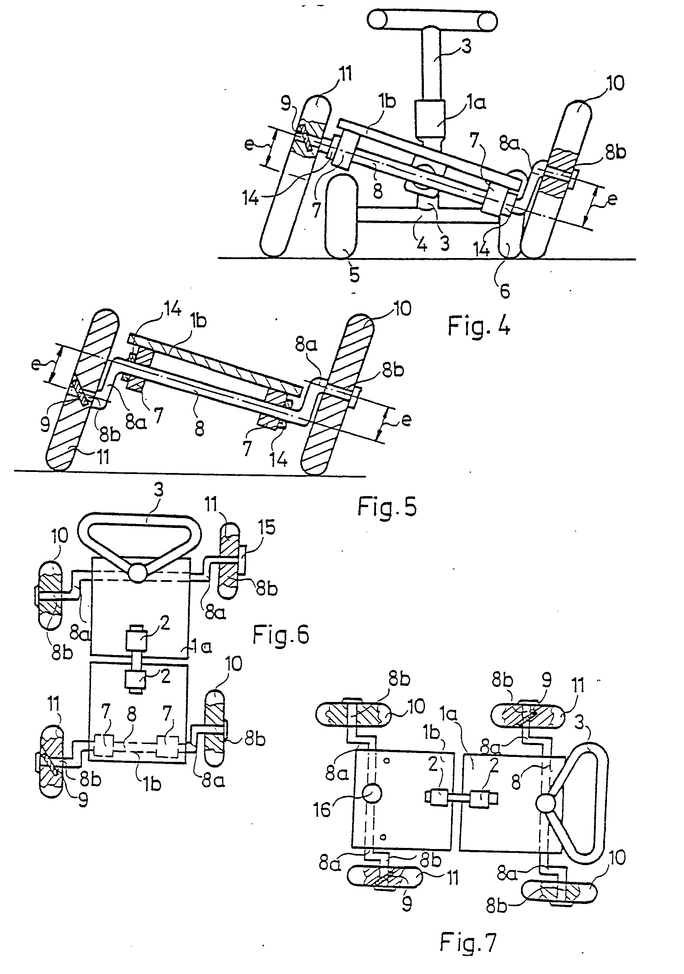

Figure 4 shows another vehicle according to the invention. In this construction given by way of example, the structural build-up of the vehicle is similar to that of the solution shown in Figures 1 to 3. The only difference is that one end of the driving shaft 8 — on the driving wheel-side 10 — of the driving bicycle embedded in bearings 7 is formed as an eccentric arm 8a, the size of which is identical with the eccentricity $e$ of the driving shaft 8, the driving wheel 10 freely turning around its centre is embedded on the bearing stub 8a of the eccentric arm. The driving wheel 11 is firmly fixed with pin 9 described in the examples shown in Figures 1 to 3 to the other end of the driving shaft 8.

In the construction given by way of example shown in Figure 4, similarly as before the road differences are eliminated by the driving wheel 10 freely rotating around its centre.

Naturally both ends of the driving shaft 8 can be formed with eccentric arms 8a corresponding to the eccentricity $e$, and with bearing stubs 8b (Figure 5). In this case the driving wheel 10 freely turning around its centre is embedded on bearing stub 8b of the eccentric arm 8a of the driving shaft 8, while through the centre of driving wheel 11 it is held non-rotatably with pin 9 on the bearing stub 8b of the eccentric arm 8a formed at the other end of the driving shaft 8.

The great advantage of this construction is that the driving wheels 10 and 11 are completely identical, which significantly facilitates production. A further advantage is that both the freely turning wheel and the fixed driving wheel 11 are centrally fixed to the driving shaft 8.

In case of the construction given by way of example as shown in Figure 6, the steerable chassis-part 1a is supported by a driving bicycle consisting of a further driving shaft 8 and eccentrically connected driving wheels 10 and 11. Here too the driving shaft 8 is turnably embedded in bearings 7 on the steerable chassis-part 1a. In this construction the driving is done separately by two persons as described above. The steering is carried out in such a way, that one of the persons drives his driving bicycle at a faster or slower rate according to the desired direction.

Naturally the steering may take place with a separately formed steering mechanism 3 as well. In this case the driving bicycle pertaining to the steerable chassis-part 1a is connected by a conventional method to rotate around the vertical axis. Naturally the steering can be solved also by forming the steerable chassis-part 1a turnably around the vertical axis in relation to the driving chassis-part 1b.

The steering is facilitated when the driving wheel 11 is fixed with clamp 15, instead of a pin 9 to the driving shaft 8 of the driving bicycle provided with the steering mechanism 3 and connected to the steerable chassis-part 1a. In this case upon releasing the clamp 15, the driving wheel 11, similarly to driving wheel 10, is able to rotate freely around its centre and thus the driving bicycle is transformed to a bicycle provided with simple free-running wheels. This construction simplifies not only the steering, but at the same time it allows the use of the vehicle equally by one or two persons.

In the construction given by way of example as shown in Figure 7, the driving bicycles are suspended on the steerable chassis-part 1a, or on the driven chassis-part 1b as to move freely around the vertical axis on the steerable chassis-part 1a, or driven chassis-part 1b. In case of such suspension or bedding of the driving shaft 8, the driving shaft 8 will roll down the jacket-surface of the two cones facing each other, while the driving wheels 10 and 11 are either fast or slow in relation to each other. This construction is particularly advantageous for sports implements, since it develops a sense of rhythm.

Several vehicles according to the invention can be interconnected in snake-form as well, which is significant in respect of mass entertainment.

## Claims

1. A vehicle comprising a chassis having a supporting steerable carriage part (1a) and a driving bicycle part (1b), the driving bicycle part comprising driving wheels (10, 11) fixed with opposite eccentricity (e) to a common driving shaft (8), the driving shaft (8) intersecting at an angle the theoretical line passing through the centre of the driving wheels (10, 11), characterised in that one of the driving wheels (11) is fixed to the driving shaft and the other driving wheel (10) is mounted on the driving shaft to be freely rotatable about its wheel centre.

2. A vehicle as claimed in claim 1, characterised in that at least one end of the driving shaft (8) of the driving bicycle is formed as an eccentric arm (8a) with eccentricity (e) and is provided with a bearing stub (8a) at its end, one of the driving wheels (10) being freely rotatably mounted on the bearing stub at its centre, the other driving wheel (11) being eccentrically fixed to the other end of the driving shaft (8), or being centrally fixed to an eccentric arm (8a) formed at said other end of the driving shaft (8).

3. A vehicle as claimed in claim 1, characterised in that one end of the driving shaft (8) of the chassis supporting driving bicycle is eccentrically (e) fixed to a disc portion of one of the driving wheels (11), while the other end of the shaft is fixed with equal and opposite eccentricities to a disc (12) having a radius (r) greater than the eccentricity (e), the other driving wheel (10) being freely rotatably mounted on the outer circumference of the disc (12).

4. A vehicle as claimed in any one of claims 1 to 3, characterised in that the chassis is formed with steerable chassis-part (1a) having a carriage provided with a steering mechanism (3) and with at least one driving bicycle (8, 10, 11), the driving chassis-part (1b) being pivotably connected to the steerable chassis-part around the longitudinal axis of the chassis (1).

5. A vehicle as claimed in any one of claims 1 to 3, characterised in that the carriage of the steerable chassis-part (1a) is formed as at least one driving bicycle (8, 10, 11).

6. A vehicle as claimed in claim 5, characterised in that the driving bicycle (8, 10, 11) of the steerable chassis-part (1a) is turnable around a vertical axis by the steering mechanism.

7. A vehicle as claimed in claim 6, characterised in that one of the driving wheels (10) of the driving bicycle (8, 10, 11) provided on the steerable chassis-part (1a) is freely rotatably mounted on a bearing stub (8b) of an eccentric arm (8a) formed at one end of a driving shaft (8) thereof, while the other driving wheel (11) is releasably fixed with clamp (15) on a bearing stub (8b) of an eccentric arm (8a) formed at the other end of the driving shaft (8), the other wheel being freely rotatable when the clamp (15) is released.

## Revendications

1. Véhicule comprenant un châssis présentant une partie de chariot orientable porteuse (1a) et une partie de bicycle moteur (1b), la partie de bicycle moteur comprenant des roues motrices (10, 11) fixées avec une excentricité opposée (e) sur un arbre moteur commun (8), l'arbre moteur (8) recoupant sous un certain angle la ligne théorique passant par le centre de rotation des roues motrices (10, 11), caractérisé en ce que l'une des roues motrices (11) est fixée sur l'arbre moteur et l'autre roue motrice (10) est montée sur l'arbre moteur de manière à pouvoir tourner librement autour de son centre de rotation de roue.

2. Véhicule tel que revendiqué dans la revendication 1, caractérisé en ce qu'au moins une extrémité de l'arbre moteur (8) du bicycle moteur est réalisée sous forme d'un bras excentrique (8a) ayant une excentricité (e) et est munie axe de portée (8b) à son extrémité, l'une des roues motrices (10) étant montée de manière librement rotative sur l'axe de portée en son centre de rotation, l'autre roue motrice (11) étant fixée de manière excentrique sur l'autre extrémité de l'arbre moteur (8), ou étant fixée de manière centrale sur un bras excentrique (8a) réalisé à ladite autre extrémité de l'arbre moteur (8).

3. Véhicule tel que revendiqué dans la revendication 1, caractérisé en ce qu'une extrémité de l'arbre moteur (8) du bicycle moteur porteur de châssis est fixé de manière excentrique (e) sur une partie de disque de l'une des roues motrices (11), tandis que l'autre extrémité de l'arbre est fixée avec des excentricités égales et opposées sur un disque (12) présentant un rayon (r) plus grand que l'excentricité (e), l'autre roue motrice (10) étant montée de manière librement rotative sur la périphérie extérieure du disque 12.

4. Véhicule tel que revendiqué dans l'une quelconque des revendications 1 à 3, caractérisé en ce que le châssis est réalisé avec une partie de châssis orientable (1a) présentant un chariot muni d'un mécanisme directeur (3) et avec au moins un bicycle moteur (8, 10, 11), la partie de châssis motrice (1b) étant reliée de manière pivotante à la partie de châssis orientable autour de l'axe longitudinal du châssis (1).

5. Véhicule tel que revendiqué dans l'une quelconque des revendications 1 à 3, caractérisé en ce que le chariot de la partie de châssis orientable (1a) est réalisé sous forme d'au moins un bicycle moteur (8, 10, 11).

6. Véhicule tel que revendiqué dans la revendication 5, caractérisé en ce que le bicycle moteur (8, 10, 11) de la partie de châssis orientable (1a) peut tourner autour d'un axe vertical grâce au mécanisme directeur.

7. Véhicule tel que revendiqué dans la revendication 6, caractérisé en ce que l'une des roues motrices (10) du bicycle moteur (8, 10, 11) prévue sur la partie de châssis orientable (1a) est montée de manière librement rotative sur un axe de portée (8b) d'un bras excentrique (8b) réalisé à une extrémité d'un arbre moteur (8) de celle-ci, tandis que l'autre roue d'entraînement (11) est fixée de manière amovible à l'aide d'un organe de serrage (15) sur un axe de portée (8b) d'un bras excentrique (8a) réalisé à l'autre extrémité de l'arbre moteur (8), l'autre roue pouvant tourner librement lorsque l'organe de serrage (15) est libéré.

**Patentansprüche**

1. Fahrzeug mit einem Fahrgestell, das einen tragenden, lenkbaren Fahrzeugteil (1a) und einen antreibenden, zweirädrigen Teil (1b) aufweist, wobei der antreibende, zweirädrige Teil antreibende Räder (10, 11) umfaßt, die mit entgegengesetzter Exzentrizität (e) auf einer gemeinsamen antreibenden Welle (8) angeordnet sind, wobei die antreibende Welle eine gedachte, durch den Mittelpunkt der antreibenden Räder (10, 11) verlaufende Linie in einem Winkel schneidet, dadurch gekennzeichnet, daß ein antreibendes Rad (11) auf der antreibenden Welle befestigt ist und das andere antreibende Rad (10) auf der antreibenden Welle so angeordnet ist, daß es um seinen Mittelpunkt frei drehbar ist.

2. Fahrzeug nach Anspruch 1, dadurch gekennzeichnet, daß zumindest ein Ende der antreibenden Welle (8) des antreibenden Zweiradteiles als ein exzentrischer Arm (8a) mit der Exzentrizität (e) ausgebildet ist und an seinem Ende einen Lagerstumpf (8b) aufweist, wobei ein antreibendes Rad (10) auf dem Lagerstumpf um seinen Mittelpunkt frei drehbar gelagert ist, und das andere antreibende Rad (11) am anderen Ende der antreibenden Welle (8) exzentrische befestigt ist oder an einem exzentrischen Arm (8a), der am genannten anderen Ende der antreibenden Welle (8) ausgebildet ist, zentrisch befestigt ist.

3. Fahrzeug nach Anspruch 1, dadurch gekennzeichnet, daß ein Ende der antreibenden Welle (8) des fahrgestelltragenden antreibenden Zweiradteiles mit der Exzentrizität (e) an einem scheibenförmigen Teil eines antreibenden Rades (11) befestigt ist, während das andere Ende der Welle mit der gleichen, entgegengesetzten Exzentrizität an einer Scheibe (12) befestigt ist, deren Radius (r) größer ist als die Exzentrizität (e), wobei das andere antreibende Rad (10) am äußeren Umfang der Scheibe (12) frei drehbar gelagert ist.

4. Fahrzeug nach einem der Ansprüche 1 bis 3, dadurch gekennzeichnet, daß das Fahrgestell mit einem lenkbaren Fahrzeugteil (1a), der mit einem Wagen mit einem Lenkmechanismus (3) versehen ist, und mit zumindest einem antreibenden Zweiradteil (8, 10, 11) ausgebildet ist, wobei der antreibende Teil (1b) mit dem lenkbaren Fahrgestellteil schwenkbar um die Längsachse der Fahrgestells (1) verbunden ist.

5. Fahrzeug nach einem der Ansprüche 1 bis 3, dadurch gekennzeichnet, daß der Wagen des lenkbaren Fahrgestellteiles (1a) von mindestens einem antreibenden Zweiradteil (8, 10, 11) gebildet wird.

6. Fahrzeug nach Anspruch 5, dadurch gekennzeichnet, daß der antreibende Zweiradteil (8, 10, 11) des lenkbaren Fahrgestellteiles (1a) durch den Lenkmechanismus um eine Vertikalachse drehbar ist.

7. Fahrzeug nach Anspruch 6, dadurch gekennzeichnet, daß ein antreibendes Rad (10) des auf dem lenkbaren Fahrzeugteil (1a) vorgesehenen antreibenden Zweiradteiles (8, 10, 11) frei drehbar auf einem Lagerstumpf (8b) eines exzentrischen Armes (a) gelagert ist, der an einem Ende seiner antreibenden Welle (8) angeordnet ist, während das andere antreibende Rad (11) auf einem Lagerstumpf (8b) eines exzentrischen Armes (8a) am anderen Ende der antreibenden Welle (8) mit einer Klammer (15) lösbar befestigt ist, wobei das andere Rad frei drehbar ist, wenn die Klammer (15) gelöst wird.

Fig.1

Fig. 2

Fig.3

1

Fig. 4

Fig. 5

Fig. 6

Fig. 7

2